# EUROPEAN PATENT SPECIFICATION

(11) **EP 4 159 422 B1**
(45) Date of publication and mention of the grant of the patent: **22.07.2026**
(21) Application number: 22197300.1
(22) Date of filing: 23.09.2022
(51) Int. Cl.: B29D 11/00

(54) **TRANSFER DEVICE AND DYEING SYSTEM**
TRANSFERVORRICHTUNG UND FÄRBESYSTEM
DISPOSITIF DE TRANSFERT ET SYSTÈME DE TEINTURE

(30) Priority: 30.09.2021 JP 2021161167
(43) Date of publication of application: 05.04.2023
(73) Proprietor: Nidek Co., Ltd., Aichi 443-0038 (JP)
(72) Inventor: ABE, Koji, Gamagori, Aichi 4430038 (JP); SHIBATA, Ryoji, Gamagori, Aichi 4430038 (JP); INUZUKA, Minoru, Gamagori, Aichi 4430038 (JP); TANAKA, Motoshi, Gamagori, Aichi 4430038 (JP); NAKAMURA, Shigenobu, Gamagori, Aichi 4430038 (JP)
(74) Representative: Hoefer & Partner Patentanwälte mbB

(56) References cited:
- JP-B2- 5 914 104
- US-A1- 2011 023 243
- US-A1- 2021 032 809

## Description

### TECHNICAL FIELD

The present disclosure relates to a transfer device that transfers a dye from a base body to which the dye is adhered to a resin body in order to dye the resin body, and a dyeing system including the transfer device.

### BACKGROUND ART

Various techniques for dyeing a resin body such as a plastic lens have been proposed. For example, in a dyeing method called an immersion dyeing method, a resin body is dyed by immersing the resin body in a dyeing solution. However, in the immersion dyeing method, it is difficult to improve the working environment and to dye a part of the resin body (for example, lens having a high refractive index).

Therefore, a technique has been proposed in which a dye is transferred to a surface of a resin body and the resin body to which the dye is adhered is heated to dye the resin body. For example, in the dyeing method described in JP 2018- 127 722A, an ink containing a subliming dye is applied (printed) to a base body by a printing device (ink jet printer). Next, a transfer step of transferring the dye to the resin body is performed by sublimating the subliming dye applied to the base body in a state where the resin body and the base body are disposed in a vacuum in a non-contact manner. Thereafter, a fixing step of heating the resin body to fix the dye to the resin body is performed.

Furthermore, a technique of dyeing other regions while making a part of the surface of the resin body an undyed region has also been proposed. For example, in a dyeing method described in JP 2008- 281 729A, in the fixing step performed after the transfer step, the resin body is irradiated with infrared rays in a state where the region of the resin body to which the dye is not transferred (that is, undyed region that is not planned to be dyed) is covered by the shielding means. As a result, the colorless and transparent region of the resin body is suppressed from yellowing due to heating.

In the method described in JP 2008- 281 729A, even when the undyed region of the resin body is shielded in the fixing step, in a case where the dye adheres to the undyed region, heat may be conducted from the dyed region to the undyed region, and the dye may be fixed to the undyed region as well. In addition, when only the undyed region of the resin body is shielded, the resin body may be distorted because of the temperature difference generated between the dyed region and the undyed region. Therefore, a technique capable of more appropriately performing partial dyeing of the resin body is desired.
Prior art document US 2011 / 0 023 243 A1 discloses a method of dyeing a plastic lens includes the steps of applying a sublimation dye to a dyeing substrate, holding the dyeing substrate on a holding member, holding a plastic lens on the holding member at a position above the dyeing substrate, evacuating a vacuum vessel which accommodates the holding member, transferring the dyeing substrate from the holding member to a heating device provided in the vacuum vessel, so that the dyeing substrate is held to be heatable by the heating device, by vertically moving at least one of the holding member and the heating device, bringing the plastic lens in close proximity to the dyeing substrate by vertically moving at least one of the holding member and the heating device which holds the dyeing substrate, and dyeing the target surface of the plastic lens with the sublimation dye by sublimating the sublimation dye by heating the dyeing substrate using the heating device. An apparatus for dyeing a plastic lens is also disclosed.

### SUMMARY OF INVENTION

A typical object of the present disclosure is to provide a transfer device and a dyeing system capable of appropriately performing partial dyeing of a resin body.

The object underlying the present invention is achieved by a transfer device according to independent claim 1 and by a dyeing system according to independent claim 9. Preferred embodiments are defined in the respective dependent claims
(1) A transfer device that transfers a subliming dye from a base body to which the dye is adhered, to a resin body to be dyed, the transfer device including:
   a blocked chamber placement unit that places the resin body transported from an outside inside a blocked chamber in a state where the resin body faces the base body in a non-contact manner;
   an electromagnetic wave generating unit that generates an electromagnetic wave for heating the dye adhered to the base body;
   a mask set unit that sets a mask shielding a part of a space from the electromagnetic wave generating unit to the resin body;
   an atmospheric pressure control unit that controls an atmospheric pressure in the blocked chamber in which the base body and the resin body are placed; and
   a controller that controls the transfer device,
   in which in a case where partial dyeing that changes a dyeing state in a dyed region and a undyed region is performed, the controller sets the mask by the mask set unit to shield between the undyed region and the electromagnetic wave generating unit, and performs a partial transfer step of heating the dye of the base body by the electromagnetic wave generating unit, in a state where the atmospheric pressure in the blocked chamber is lowered by the atmospheric pressure control unit, to transfer the dye to the resin body.
(3) In the transfer device according to the present invention, the mask set unit sets the mask between the electromagnetic wave generating unit and the base body in the space from the electromagnetic wave generating unit to the resin body.
(2) In the transfer device according to the above-described (1),
   the partial dyeing includes a gradation dyeing that continuously reduces a density of dyeing from the dyed region to the undyed region.
(4) In the transfer device according to the above-described (3),
   the electromagnetic wave generating unit applies the electromagnetic wave downward from above the base body, and
   the mask set unit places the mask on the base body from above to set the mask.
(5) In the transfer device according to the above-described (1) or (2),
   the mask set unit sets the mask between the base body and the resin body in the space from the electromagnetic wave generating unit to the resin body.
(6) The transfer device according to any one of the above-described (1) to (5), further including:
   a reading unit that reads information regarding the resin body to be dyed,
   in which the controller controls whether or not the mask is set by the mask set unit according to information indicating whether or not the partial dyeing is performed with respect to the resin body, which is included in the information read by the reading unit.
(7) In the transfer device according to any one of the above-described (1) to (6),
   the blocked chamber placement unit places a dyeing tray, as a unit of dyeing, on which the resin body and the base body are placed facing each other in a non-contact manner inside the blocked chamber, and
   the mask set unit sets the mask on the dyeing tray.
(8) In the transfer device according to the above-described (7),
   the dyeing tray includes:
      a base body placing unit on which the base body is placed; and
      a positioning unit that projects upward from an outside of the base body placing unit and positions the base body to be placed on the base body placing unit, and
   the mask set unit sets the mask in accordance with the positioning unit of the dyeing tray to fix a position of the mask.
(9) In the transfer device according to the above-described (7) or (8),
   the resin body is a lens used for eyeglasses,
   two lenses are placeable on the dyeing tray, and
   the mask includes two mask units used for each of the two lenses placed on the dyeing tray.
(10) A dyeing system including:
   the transfer device according to any one of the above-described (1) to (9); and
   a dye fixing device that heats a resin body to which a subliming dye is transferred by the transfer device to fix the dye to the resin body.
(11) In the dyeing system according to the above-described (10),
   the dye fixing device includes:
      a laser light source that emits laser light; and
      a scanning unit that scans the laser light emitted from the laser light source, and
   the dye fixing device irradiates the resin body with the laser light to fix the dye to the resin body.

According to the transfer device and the dyeing system, partial dyeing of the resin body is appropriately performed.

### BRIEF DESCRIPTION OF DRAWINGS

FIG. 1 is a block diagram illustrating a system configuration of a dyeing system 1.
FIG. 2 is a perspective view of a dyeing tray 80 in a state where two lenses L are placed, as viewed diagonally from the front right.
FIG. 3 is a perspective view of a transport device 10, a transfer device 40, and a dye fixing device 50 as viewed diagonally from the front right.
FIG. 4 is a perspective view of the transfer device 40 as viewed diagonally from the front right.
FIG. 5 is a cross-sectional view of a vertical cross section of the transfer device 40 as viewed from the rear part.
FIG. 6 is a perspective view of a blocked chamber placement unit 430 as viewed diagonally from the front right.
FIG. 7 is a plan view of a mask M.
FIG. 8 is a plan view of the transfer device 40 in a state where a blocked chamber bottom portion 440 is moved to a mask attachment and detachment position.
FIG. 9 is a perspective view of a mask set unit 460 in a state where the mask M is held, as viewed from diagonally from the rear right.
FIGs. 10A and 10B are flowcharts of transfer control processing performed by the transfer device 40.

### DESCRIPTION OF EMBODIMENTS

### <Overview>

A transfer device exemplified in the present disclosure transfers (adheres) a dye from a base body to which a subliming dye is adhered to a resin body to be dyed. The transfer device of the present disclosure is provided with a blocked chamber placement unit, an electromagnetic wave generating unit, a mask set unit, an atmospheric pressure control unit, and a controller. The blocked chamber placement unit places the base body and the resin body transported from the outside inside a blocked chamber. The electromagnetic wave generating unit generates an electromagnetic wave for heating the dye adhered to the base body. The mask set unit shields a part of the space from the electromagnetic wave generating unit to the resin body. The atmospheric pressure control unit controls the atmospheric pressure in the blocked chamber in which the base body and the resin body are placed. In a case where partial dyeing that changes the dyeing state in the dyed region and the undyed region is performed, the controller sets the mask by the mask set unit to shield between the undyed region and the electromagnetic wave generating unit, and performs a partial transfer step of transferring the dye to the resin body by heating the dye of the base body by the electromagnetic wave generating unit in a state where the atmospheric pressure in the blocked chamber is lowered by the atmospheric pressure control unit.

According to the transfer device of the present disclosure, in a case where the partial dyeing is performed, the dye transfer step is performed with the mask set unit automatically shielding the space between the undyed region of the resin body and the electromagnetic wave generating unit. As a result, the possibility that the dye is unintentionally transferred to an undyed region that is not planned to be dyed is appropriately reduced. Therefore, even when the mask or the like is not used in the fixing step, only the region to be dyed is likely to be appropriately dyed, and the resin body is unlikely to be distorted because of the temperature difference. Therefore, the resin body is dyed more appropriately.

The electromagnetic wave generating unit may be provided inside the blocked chamber. In addition, in a case where the electromagnetic wave generating unit is provided outside the blocked chamber, the portion of the blocked chamber located between the electromagnetic wave generating unit and the base body may be made of a material capable of sealing the internal space while transmitting the electromagnetic wave.

The partial dyeing may include gradation dyeing in which the density of dyeing is continuously changed from the dyed region to the undyed region. In the gradation dyeing, since the undyed region is not dyed while the dyeing density is lowered from the dyed region to the undyed region, the difficulty of dye is high. However, by applying the techniques of the present disclosure, the possibility that undyed region is dyed is appropriately reduced. Therefore, the gradation dyeing which is difficult is also appropriately performed.

However, the partial dyeing may include dyeing other than gradation dyeing. For example, the partial dyeing may include a dyeing method in which the undyed region is not dyed and the dyed region is dyed at a uniform density. In addition, a special partial dyeing may be performed by making the shape of the dyed region or the undyed region linear or the like.

In the space from the electromagnetic wave generating unit to the resin body, the mask set unit may shield between the electromagnetic wave generating unit and the undyed region of the resin body by setting a mask between the electromagnetic wave generating unit and the base body. In the transfer step, the dye adhered to the base body is sublimated and transferred to the resin body. Therefore, when the mask is set between the base body and the resin body, the sublimated dye also adheres to the mask. When the mask to which the dye is adhered is used a plurality of times in the transfer step, the dye adhered to the mask is also transferred to the resin body, which may deteriorate the dyeing quality. Therefore, the mask to which the dye is adhered is required to be washed or replaced frequently. In addition, even in a method of shielding the undyed region of the resin body with the mask in the fixing step, the dye heated when fixing sublimates again and adheres to the mask in many times. On the other hand, in a case where the mask is set between the electromagnetic wave generating unit and the base body, the sublimated dye is unlikely to adhere to the mask. In addition, when transferring the dye to the resin body by a vapor phase transfer method, it is important to keep the distance between the base body and the resin body at an appropriate distance. In a case where the mask is set between the base body and the resin body, the distance between the base body and the resin body may change according to the presence or absence of the mask, but in a case where the mask is set between the electromagnetic wave generating unit and the base body, the distance between the base body and the resin body does not change. Therefore, the transfer step of the dye is performed more appropriately.

The electromagnetic wave generating unit may apply the electromagnetic wave downward from above the base body. The mask set unit may place the mask on the base body from above to set the mask. When the electromagnetic wave generating unit applies the electromagnetic wave downward from above the base body, the dye sublimated from the base body descends due to gravity and is appropriately deposited on the resin body located below the base body. Furthermore, the mask is easily set by simply placing the mask on the base body from above. Since the set mask shields a portion of the base body projected on the undyed region of the resin body when viewed from the electromagnetic wave generating unit, the portion projected on the undyed region is not heated. As a result, the transfer of the dye to the undyed region of the resin body is appropriately suppressed. Therefore, partial dyeing is performed more appropriately.

The mask set unit may shield between the electromagnetic wave generating unit and the undyed region of the resin body by setting a mask between the base body and the resin body in the space from the electromagnetic wave generating unit to the resin body. In this case, the dye is blocked by the mask while the sublimated dye is moving from the base body to the undyed region of the resin body. Therefore, the transfer of the dye to the undyed region is appropriately suppressed.

The transfer device may be further provided with a reading unit that reads information regarding the resin body to be dyed. The controller may control whether or not the mask is set by the mask set unit according to the information indicating whether or not the partial dyeing is performed with respect to the resin body, which is included in the information read by the reading unit. That is, the controller may set the mask by the mask set unit in a case where it is found from the information read by the reading unit that it is a resin body on which the partial dyeing is performed. The controller may not set the mask in a case where it is found from the information read by the reading unit that it is a resin body on which the partial dyeing is not performed. In this case, an appropriate transfer step according to whether or not the partial dyeing is performed is performed for each resin body to be dyed.

The reading unit may include an identifier reading unit that reads an identifier provided for each transport unit. The transport unit is a unit for transporting and dyeing a resin body. For example, the transport unit may include a dyeing tray and a resin body placed on the dyeing tray. A control unit may acquire information corresponding to the identifier read by the identifier reading unit from the database that stores the information on the resin body for each transport unit. In this case, for example, even in a case where the order of the plurality of transport units is changed, the information regarding the resin body of each transport unit is appropriately obtained by the control unit. The identifier may be provided, for example, on the dyeing tray on which the resin body is placed, or on the base body used in the transfer step.

In addition, the reading unit may include a tag reading unit that reads information from a writable tag provided in the transport unit. In this case, by storing information indicating whether or not to perform the gradation dyeing in the tag in advance, for example, even in a case where the order of the plurality of transport units is changed, the information regarding the resin body of each transport unit is appropriately obtained by the control unit.

In other words, the controller may acquire information (discrimination information) for discriminating whether or not to perform the partial dyeing, and may discriminate whether or not to set the mask based on the acquired information. The discrimination information is not limited to the information read by the reading unit (that is, information read by the reading unit indicating whether or not the partial dyeing is performed with respect to the resin body). For example, an instruction to perform the partial dyeing may be input as discrimination information by the user operating an operation unit or the like. The controller may set the mask in a case where an instruction to perform the partial dyeing is input. In addition, a mode in which the partial dyeing is performed and a mode in which the partial dyeing is not performed may be switched according to an instruction from the user or the like. The controller may determine whether or not to set the mask according to the mode at that time.

The blocked chamber placement unit may place the dyeing tray, as a unit of dyeing, on which the resin body and the base body are placed facing each other in a non-contact manner inside the blocked chamber. The mask set unit may set the mask on the dyeing tray. In this case, the mask is appropriately set for each transport unit that is a unit of dyeing.

The unit of dyeing is a unit of a resin body and an accessory when at least each transfer step is performed. In the present embodiment, at least the dyeing tray and the resin body placed on the dyeing tray are included in the unit of dyeing. In the transfer step, the dyeing tray, the resin body, and the base body are the units of dyeing. In the present embodiment, the dyeing tray on which the resin body is placed is transported as one unit by a transport device (details will be described later).

The dyeing tray may be provided with a base body placing unit and a positioning unit. The base body is placed on the base body placing unit. The positioning unit positions the base body to be placed on the base body placing unit. The mask set unit may set the mask in accordance to the positioning unit of the dyeing tray to fix the position of the mask on the dyeing tray. In this case, the relative positions of the resin body, the base body, and the mask are fixed in appropriate positions by the positioning unit. Therefore, the quality of partial dyeing is further improved.

The resin body may be a lens used for eyeglasses. Two lenses may be placed on the dyeing tray. The mask may be provided with two mask units used for each of the two lenses placed on the dyeing tray. In this case, only by installing the mask on the dyeing tray, not only the relative position of the mask with respect to each lens but also the angle (direction) of each mask unit with respect to each lens is automatically determined. Therefore, the partial dyeing is performed more appropriately.

The controller may perform a mask removing step and a mask mounting step in a case where a mask replacement instruction used in the partial transfer step is input. In the mask removing step, the controller sets the mask on the dyeing tray by the mask set unit, and then transports the dyeing tray on which the mask is set to the outside. In the mask mounting step, the mask is held by the mask set unit from the dyeing tray transported from the outside with a new mask set. In this case, even when an operator does not replace the mask by himself/herself, the mask is appropriately replaced only by transporting the dyeing tray in which the new mask is set to the transfer device.

A transfer method exemplified in the present disclosure is a method of transferring the dye from the base body to which a subliming dye is adhered to the resin body to be dyed. The transfer method of the present disclosure includes a mask setting step and a transfer step. In the mask setting step, in a case where the partial dyeing that changes the dyeing state in the dyed region and the undyed region is performed, a mask that shields a part of the space from the electromagnetic wave generating unit for heating the dye to the resin body to be dyed is set. In the transfer step, the dye is transferred to the resin body by heating the dye on the base body by the electromagnetic wave generating unit in a state where the atmospheric pressure in the blocked chamber in which the base body, the resin body, and the mask are placed is lowered. In this case, as described above, partial dyeing of the resin body is more appropriately performed.

The transfer method may be performed by performing at least a part of the plurality of steps that can be performed by the transfer device described above by the operator. For example, the mask setting step may be performed by the operator. In addition, a step of placing the resin body inside the blocked chamber may be performed by the operator.

In the transfer step in which at least a part of the step is performed by the operator, the same step as the step performed by the transfer device may be performed. For example, in the mask setting step, a mask may be set between the electromagnetic wave generating unit and the base body in the space from the electromagnetic wave generating unit to the resin body. In this case, as described above, the sublimated dye is unlikely to adhere to the mask, and the distance between the base body and the resin body does not change. Therefore, the partial dyeing is more appropriately performed. In addition, the electromagnetic wave generating unit may apply the electromagnetic wave downward from above the base body. In the mask setting step, the mask may be placed on the base body from above to set the mask. In this case, the mask is more easily and appropriately set.

The dyeing system exemplified in the present disclosure is provided with the above-described transfer device and a dye fixing device. In this case, as described above, the partial dyeing of the resin body is appropriately performed.

The dye fixing device is provided with a laser light source that emits laser light and a scanning unit that scans the laser light emitted from the laser light source, and may fix the dye on the resin body by irradiating the resin body with the laser light. In this case, the temperature of the surface of the resin body is raised by the laser light, so that the dye is fixed to the resin body. Therefore, yellowing (discoloration to yellow) of the resin body due to heating is unlikely to occur than in the case where not only the surface of the resin body but also the internal temperature is likely to rise (for example, in a case where the dye is fixed by an oven or the like). Therefore, even when a mask or the like is not used in the fixing step, only the region to be dyed is appropriately dyed in a state where yellowing is suppressed.

### <Embodiment>

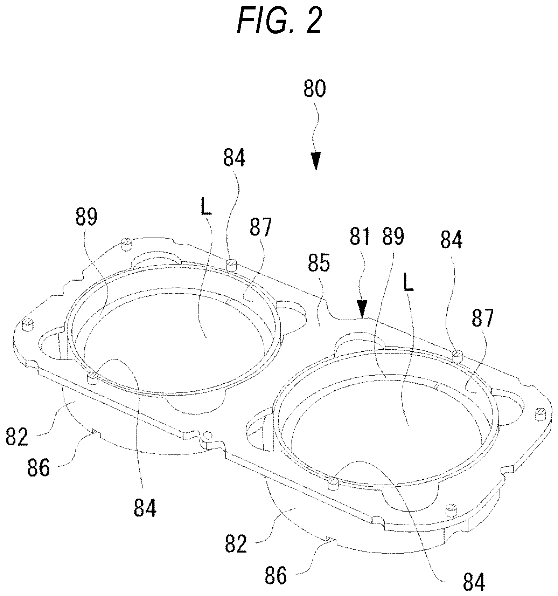

Hereinafter, one of the typical embodiments according to the present disclosure will be described with reference to the drawings. A dyeing system 1 automatically and continuously dyes the resin body. In the present embodiment, the resin body to be dyed is a plastic lens L (refer to FIG. 2 and the like) used for eyeglasses. However, at least a part of the techniques exemplified in the present disclosure can also be applied to a case of dyeing a resin body other than the lens L. For example, in a case of dyeing various resin bodies such as a goggle, a mobile phone cover, a light cover, an accessory, a toy, a film (for example, thickness of 400 µm or less), a plate material (for example, thickness of 400 µm or more), and the like, it is also possible to apply at least a part of the techniques exemplified in the present disclosure. The resin body to be dyed also includes a resin body added to a member (for example, wood or glass) different from the resin body. In addition, the dyeing system 1 of the present embodiment dyes while continuously transporting a plurality of resin bodies. However, at least a part of the techniques exemplified in the present disclosure can be adopted in a dyeing system in which resin bodies are transported one set for dyeing.

### (System Configuration)

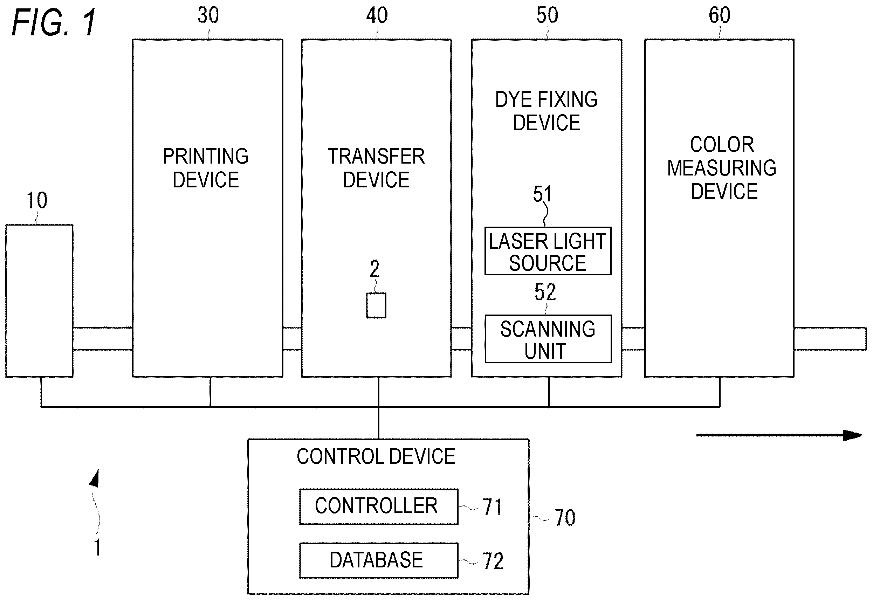

The system configuration of the dyeing system 1 of the present embodiment will be schematically described with reference to FIG. 1. The dyeing system 1 of the present embodiment is provided with a transport device 10, a printing device 30, a transfer device 40, a dye fixing device 50, a color measuring device 60, and a control device 70.

The transport device 10 transports a dyeing tray 80 (refer to FIG. 2) on which the lens L, which is a resin body, is placed, to each device in the dyeing system 1. Specifically, the transport device 10 of the present embodiment continuously transports a plurality of dyeing trays 80 in the entire dyeing system 1. The transport device 10 of the present embodiment transports the dyeing tray 80 in the order of the printing device 30, the transfer device 40, the dye fixing device 50, and the color measuring device 60 (that is, from left to right in FIG. 1).

The printing device 30 prints a dye (in the present embodiment, ink containing a dye) on a sheet-shaped base body. In the present embodiment, a paper or a metallic film (made of aluminum in the present embodiment) having an appropriate hardness is used as the base body. However, other materials such as glass plate, heat-resistant resin, and ceramic can be used as the material of the base body. In the dyeing system 1 of the present embodiment, in order to appropriately transfer the dye to the lens L while preventing the dye from agglomerating, and the like, the dye is transferred (deposited) to the surface of the lens L by heating the dye on the base body in a state where the base body and the lens L are separated from each other and face each other in a vacuum (including substantially vacuum) environment (the dyeing method in the present embodiment is referred to as a vapor phase transfer dyeing method). Therefore, in the printing device 30, an ink jet printer that prints ink containing a sublimation dye on the base body is used. The printing device 30 performs printing based on print data created by the control device 70 which is an information processing device (in the present embodiment, personal computer (hereinafter referred to as "PC"). As a result, an appropriate amount of ink (dye) adheres to an appropriate position of the base body. It is also easy to prepare the dye-containing base body for performing gradation dyeing.

It is also possible to change the configuration of the printing device 30. For example, the printing device may be a laser printer. In this case, a toner may contain a sublimation dye. In addition, instead of the printing device 30, the dye may be adhered to the base body by a dispenser (liquid quantitative coating device), a roller, or the like.

The transfer device 40 transfers the dye from the base body to the lens L in a state where the dye adhered to the base body faces the lens L. As described above, in the present embodiment, the dye is transferred from the base body to the lens L by the vapor phase transfer method. The details of the transfer device 40 will be described later.

The dye fixing device 50 heats the lens L to which the dye is transferred by the transfer device 40 to fix the dye adhered to the surface of the lens L to the resin body. The dye fixing device 50 of the present embodiment heats the lens L by irradiating the lens L with a laser light which is an electromagnetic wave. Specifically, the dye fixing device 50 of the present embodiment is provided with a laser light source 51 and a scanning unit 52. The laser light source 51 emits a laser light for heating the surface of the lens L to which the dye is transferred. The scanning unit 52 scans the laser light emitted from the laser light source 51 to irradiate the two-dimensional region of the surface of the lens L with the laser light. As a result, the temperature of the surface of the lens L rises due to the laser light, so that the dye is diffused and fixed inside the lens L. Therefore, yellowing of the lens L due to heating is unlikely to occur as compared with the case where not only the surface of the lens L but also the internal temperature is likely to rise (for example, in a case where the dye is fixed by an oven or the like). Therefore, in the fixing step, yellowing is suppressed in the undyed region (transparent region) even when the undyed region of the lens L is not shielded by the mask. However, a device (for example, oven or the like) that irradiates the lens L with an electromagnetic wave other than the laser light may be used as the dye fixing device.

The color measuring device 60 is used to measure color information on the lens L to which the dye is fixed by the dye fixing device 50. The quality of dyeing is confirmed by the measured color information.

The control device 70 controls various types of control in the dyeing system 1. As the control device 70, various information processing devices (for example, at least one of a PC, a server, a mobile terminal, and the like) can be used. The control device 70 is provided with a controller (for example, CPU or the like) 71 that controls control, and a database 72 that stores various data. It is also possible to change the configuration of the control device 70. First, a plurality of devices may cooperate to function as the control device 70. For example, a control device that controls various types of control in the dyeing system 1 and a control device including the database 72 may be different devices. In addition, the controllers of a plurality of devices may cooperate to perform various types of control in the dyeing system 1. For example, in many cases, at least one of the transport device 10, the printing device 30, the transfer device 40, the dye fixing device 50, and the color measuring device 60 is provided with a controller. In this case, the controllers of a plurality of devices may cooperate to control the dyeing system 1.

The dyeing system 1 is provided with a reading unit 2 that reads information regarding the lens L to be dyed for each unit to be transported (including a dyeing tray 80 and a lens L placed on the dyeing tray 80). As an example, the reading unit 2 of the present embodiment is an identifier reading unit that reads an identifier provided for each unit to be transported (for example, for each dyeing tray 80). The transport unit is specified by the identifier read by the reading unit 2. By specifying the transport unit, information on the lens L included in the transport unit (for example, information indicating whether or not the partial dyeing is performed with respect to the lens L) is acquired. The partial dyeing is a dyeing method in which the dyeing state is changed between the dyed region and the undyed region. In the present embodiment, as one of the partial dyeing, a case where gradation dyeing in which the density of dyeing is continuously reduced from the dyed region to the undyed region is performed is exemplified.

The reading unit 2 of the present embodiment is an identifier reader (for example, a QR code (registered trademark) reader, a barcode reader, an identification hole reader, and the like) corresponding to the identifier used. In addition, the reading unit 2 may be a tag reading unit that reads information from a tag (for example, an IC tag) on which information can be written. In this case, the tag may store information indicating whether or not the partial dyeing is performed with respect to the lens. In the present embodiment, at least the transfer device 40 is provided with the reading unit 2 of the plurality of devices constituting the dyeing system 1. However, a reading unit may be provided in a portion of the dyeing system 1 other than the transfer device 40. In addition, information indicating whether or not the partial dyeing is performed with respect to the lens may be acquired by a reading unit provided in a portion other than the transfer device 40.

The dyeing system 1 may be provided with at least the transfer device 40 among the transport device 10, the printing device 30, the transfer device 40, the dye fixing device 50, the color measuring device 60, and the control device 70. In this case, the dyeing system 1 can appropriately transfer the dye adhered to the base body S to the lens L and then dye the lens L (details will be described later). In addition, even when the dyeing system 1 may be provided with at least the transfer device 40 and the dye fixing device 50 among the transport device 10, the printing device 30, the transfer device 40, the dye fixing device 50, the color measuring device 60, and the control device 70. In this case, the dyeing system 1 can transfer (adhere) the dye from the base body S to the lens L and then appropriately fix the dye adhered to the lens L.

### (Dyeing Tray)

The dyeing tray 80 used in the dyeing system 1 of the present embodiment will be described with reference to FIG. 2. FIG. 2 is a perspective view of the dyeing tray 80 in a state where the two lenses L are installed (placed) and the base body is not installed. The dyeing tray 80 of the present embodiment is provided with a tray main body 81, a placing frame 89, and a spacer 87. The resin body (lens L in the present embodiment) to be dyed is placed on the placing frame 89. The placing frame 89 of the present embodiment is formed in a ring shape having an outer diameter slightly larger than that of the lens L. The spacer 87 extends upward in a tubular shape (cylindrical shape) from the outer peripheral portion of a portion where the lens L is placed of the placing frame 89. A mounting unit 82 is formed on the tray main body 81. The placing frame 89 and the spacer 87 are detachably mounted on the mounting unit 82. In the present embodiment, two mounting units 82 are formed on one tray main body 81. Therefore, a pair of (left and right) lenses L used for one eyeglasses are dyed in a state of being placed on one dyeing tray 80.

The base body placing unit 85 on which the sheet-shaped base body to which a sublimation dye adheres is placed is formed on the outer side of the tray main body 81 above the mounting unit 82. By placing the base body on the base body placing unit 85, the sublimation dye adhered to the base body faces the lens L placed on the placing frame 89 in a non-contact manner. Therefore, the dye is appropriately transferred to the resin body.

In the tray main body 81, at a position outside the mounting unit 82 (specifically, outside the base body placing unit 85), a projection unit 84 is provided so as to project upward from the placing surface of the base body placing unit 85 on which the base body is placed. The shape of the base body of the present embodiment is a rectangular sheet that covers both of the two mounting units 82. In the present embodiment, a plurality (8 pieces) of projection units 84 are formed at positions along an outer periphery of the base body in a state of being placed at an appropriate position on the dyeing tray 80 (that is, a state of being appropriately placed on the base body placing unit 85). Therefore, by placing the base body in the region (base body placing unit 85) surrounded by the plurality of projection units 84, the base body is appropriately positioned with respect to the lens L. In addition, the possibility that the position of the placed base body is displaced with respect to the lens L is reduced. That is, at least a part of the plurality of projection units 84 in the present embodiment functions as a positioning unit for positioning the base body with respect to the lens L.

### (Schematic Configuration of Devices)

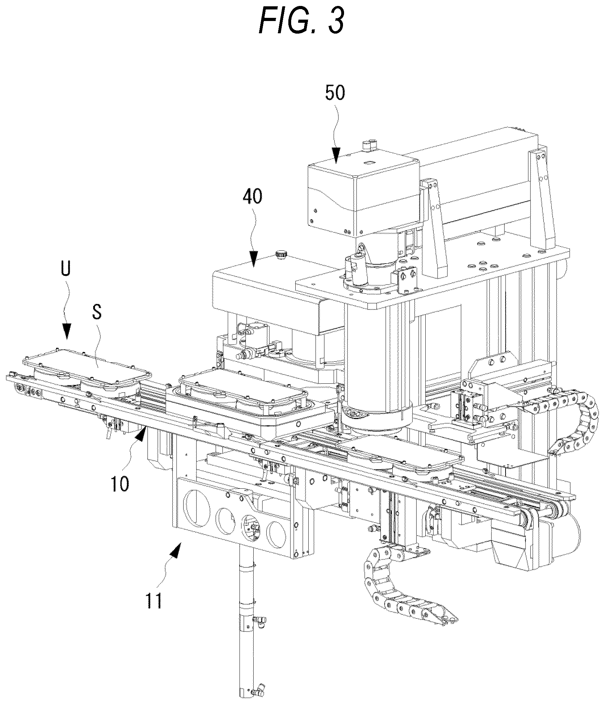

With reference to FIG. 3, a part of the devices configuration of the transport device 10, the transfer device 40, and the dye fixing device 50 will be schematically described. As illustrated in FIG. 3, in the transport device 10 of the present embodiment schematically continuously transports a plurality of transport units U from the upstream side (left side of the paper surface in FIG. 3) to the downstream side (right side of the paper surface in FIG. 3) in the transport direction. The transfer device 40 is provided on the upstream side in the transport direction with respect to the dye fixing device 50. First, the transport unit U is transported to the transfer device 40 in a state where the lens L and the base body S are placed. Specifically, the transport device 10 transports the transport unit U to the front of the transfer device 40, and lifts the transport unit U by a delivery unit 11 to deliver the transport unit U to the transfer device 40. The transfer device 40 places the delivered transport unit U inside, and transfers the dye of the base body S to the lens L (details will be described later). When the transfer step is completed, the transfer device 40 returns the transport unit U to the delivery unit 11. Next, the transport device 10 transports the transport unit U returned from the transfer device 40 to the front of the dye fixing device 50. The dye fixing device 50 fixes the dye on the lens L of the transported transport unit U. When the fixing step is completed, the transport device 10 transports the transport unit U further to the downstream side.

### (Transfer Device)

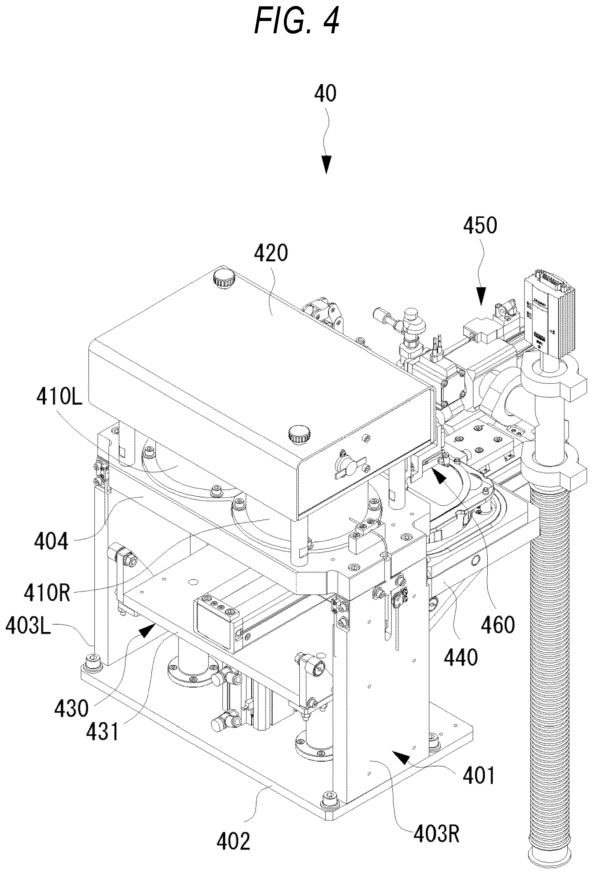

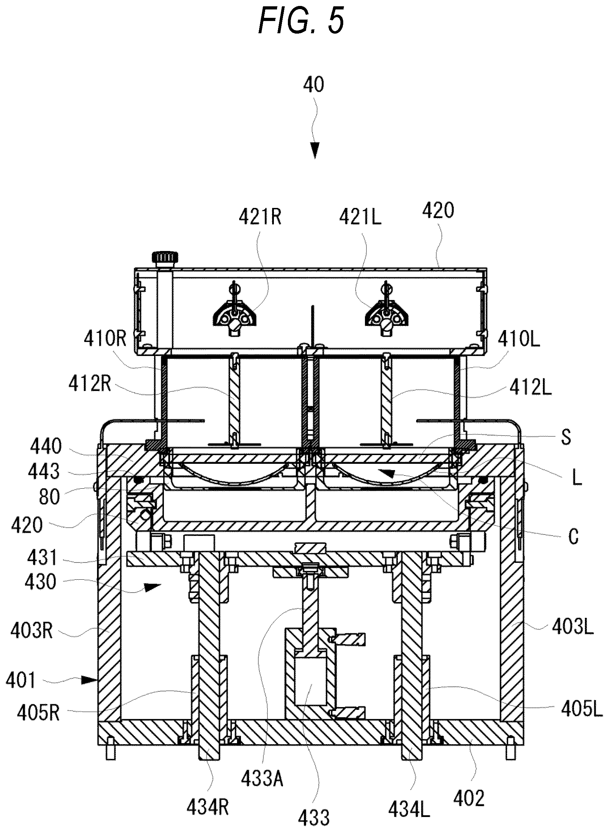

The transfer device 40 will be described with reference to FIGs. 4 to 9. FIG. 4 is a perspective view of the transfer device 40 in a state where a blocked chamber bottom portion 440 (described later) is moved rearward (in the present embodiment, the mask attachment and detachment position where a mask M is mounted and held by the mask set unit 460), as viewed diagonally from the front right. The lower left side of the paper surface in FIG. 4 is the front part of the transfer device 40, the upper right side of the paper surface in FIG. 4 is the rear part of the transfer device 40, the upper left side of the paper surface of FIG. 4 is the left side of the transfer device 40, and the lower right side of the paper surface of FIG. 4 is the right side of the transfer device 40. In FIG. 5, the mask M (described later) is omitted.

As illustrated in FIG. 4, the transfer device 40 of the present embodiment is provided with a table portion 401, electromagnetic wave passing units 410R and 410L, an electromagnetic wave generating unit 420, a blocked chamber placement unit 430, and an atmospheric pressure control unit 450. The table portion 401 supports the transfer device 40. The electromagnetic wave passing units 410R and 410L allow the electromagnetic waves generated by the electromagnetic wave generating unit 420 to pass through the base body S disposed in a blocked chamber C (refer to FIG. 5) described later. The electromagnetic wave generating unit 420 generates an electromagnetic wave for heating the dye adhered to the base body S. The blocked chamber placement unit 430 forms the blocked chamber C together with the table portion 401 and the like. That is, the inside of the blocked chamber C is a sealed space surrounded by the blocked chamber placement unit 430, the table portion 401, and the like. In addition, the blocked chamber placement unit 430 places the transport unit U delivered from the delivery unit 11 (refer to FIG. 3) of the transport device 10 inside the blocked chamber C. The atmospheric pressure control unit 450 changes the atmospheric pressure in the blocked chamber C. The mask set unit 460 sets a mask that shields a part of the space from the electromagnetic wave generating unit 420 to the lens L of the transport unit U placed in the blocked chamber C.

The table portion 401 is provided with a bottom portion 402, a right pillar portion 403R, a left pillar portion 403L, and a base portion 404. The bottom portion 402 is placed at the installation site and supports the entire transfer device 40. The right pillar portion 403R extends upward from the right end portion of the bottom portion 402. The left pillar portion 403L extends upward from the left end portion of the bottom portion 402. The base portion 404 is fixed to the upper end portion of the right pillar portion 403R and the upper end portion of the left pillar portion 403L. Therefore, when the table portion 401 is viewed from the front-rear direction, a rectangular opening is formed in the table portion 401. The base portion 404 is a substantially plate-shaped member having sufficient strength. Opening portions are formed in the base portion 404 at positions facing each of the two lenses L placed in the blocked chamber C by the blocked chamber placement unit 430.

The electromagnetic wave passing units 410R and 410L are cylindrical members, and are provided between each of the two opening portions formed in the base portion 404 and the electromagnetic wave generating unit 420. As illustrated in FIG. 5, the inside of the electromagnetic wave generating unit 420 is provided with generation sources (halogen heaters in the present embodiment) 421R and 421L for generating electromagnetic waves. The generation source 421R is disposed on the axis of the electromagnetic wave passing unit 410R having a tubular shape. Similarly, the generation source 421L is disposed on the axis of the electromagnetic wave passing unit 410L having a tubular shape.

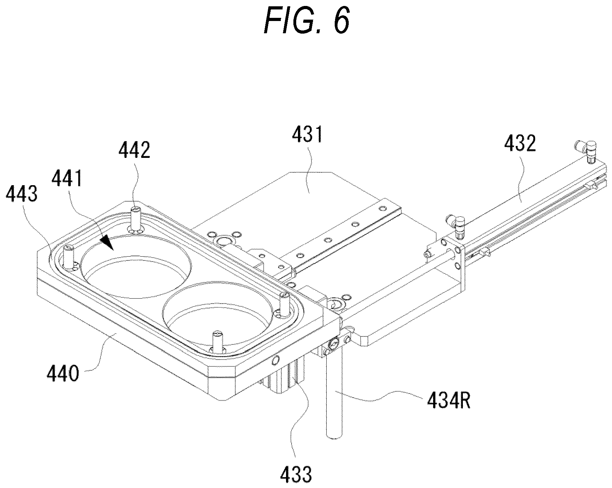

FIG. 6 is a perspective view of the blocked chamber placement unit 430 as viewed diagonally from the front right. As illustrated in FIG. 6, the blocked chamber placement unit 430 is provided with a base stand 431, a blocked chamber bottom portion 440, a front-back moving unit 432, a vertical moving unit 433, and guide poles 434R and 434L (only guide pole 434R is illustrated in FIG. 6). The base stand 431 is a substantially plate-shaped member and serves as a base for the blocked chamber placement unit 430. As illustrated in FIG. 4, the base stand 431 is disposed inside a rectangular opening in the table portion 401. As illustrated in FIG. 6, the blocked chamber bottom portion 440 is a substantially plate-shaped member having sufficient strength. On the upper surface of the blocked chamber bottom portion 440, a transport unit placing unit 441 on which the transport unit U (refer to FIG. 3 and the like) including the base body S is placed is formed. The transport unit placing unit 441 of the present embodiment has irregularities that match the shape of the dyeing tray 80 (refer to FIGs. 2 and 3).

The blocked chamber bottom portion 440 blocks a bottom surface of the blocked chamber C (refer to FIG. 5) by being pressed from below to above the base portion 404 (refer to FIG. 4) of the table portion 401. As illustrated in FIG. 6, a tray pressing unit 442 and a seal unit 443 are provided on the upper surface of the blocked chamber bottom portion 440.

The tray pressing unit 442 projects upward from each of the plurality of positions in the transport unit placing unit 441 (in the present embodiment, the four corner portions of the transport unit placing unit 441), and is biased upward by a biasing member (for example, spring or the like). When the blocked chamber bottom portion 440 is pressed upward from below with respect to the base portion 404, the dyeing tray 80 of the transport unit U is pressed into the inside of the blocked chamber C by the plurality of tray pressing units 442. As a result, the dye heated by the electromagnetic wave and sublimated from the base body S is unlikely to leak to the outside of the placing frame 89 and the spacer 87 (refer to FIG. 2) of the dyeing tray 80.

The seal unit 443 is disposed so as to cover the outer periphery of the transport unit placing unit 441 in an annular shape without a gap. The seal unit 443 projects slightly upward from the upper surface of the transport unit placing unit 441. The seal unit 443 is made of a material that can withstand high temperatures and pressure changes and has appropriate elasticity. Therefore, when the blocked chamber bottom portion 440 is pressed from below to above the base portion 404, the seal unit 443 is pressed against the bottom surface of the base portion 404 and deformed, and the airtightness of the blocked chamber C (refer to FIG. 5) is improved.

The front-back moving unit 432 is an actuator that moves the blocked chamber bottom portion 440 in the front-back direction. In addition, the vertical moving unit 433 is an actuator that moves the blocked chamber bottom portion 440 in the vertical direction. Specifically, as illustrated in FIG. 5, the vertical moving unit 433 is fixed to the bottom portion 402 of the table portion 401. An action shaft 433A of the vertical moving unit 433 is fixed to the base stand 431. In addition, the guide poles 434R and 434L are rod-shaped members extending downward from the bottom surface of the base stand 431. The guide poles 434R and 434L are vertically movably inserted into each of tubular portions 405R and 405L provided on the bottom portion 402 of the table portion 401. When the vertical moving unit 433 is driven, the base stand 431 moves in the vertical direction. The vertical movement of the base stand 431 is guided by the guide poles 434R and 434L and the tubular portions 405R and 405L. When the base stand 431 moves in the vertical direction, the blocked chamber bottom portion 440 supported by the base stand 431 moves in the vertical direction.

As illustrated in FIG. 5, a temperature control mask 412R is provided at the central portion of the cylindrical electromagnetic wave passing unit 410R. Similarly, a temperature control mask 412L is provided at the central portion of the electromagnetic wave passing unit 410L. The temperature control masks 412R and 412L block the path of the electromagnetic wave applied to the central portion of the dye circularly adhered to the base body S among the paths of the electromagnetic waves applied to the base body S from the generation sources 421R and 421L of the electromagnetic wave generating unit 420. As an example, the temperature control masks 412R and 412L of the present embodiment are provided with shaft portions extending downward along the axis of the electromagnetic wave passing units 410R and 410L having cylindrical shapes, and disk portions extending outward in a circle from the lower portions of the shaft portions around the axis. The electromagnetic wave applied to the central portion of the circular dye is blocked by the disk portion.

In a case where the temperature control masks 412R and 412L are not provided, the intensity of the electromagnetic wave applied to the central portion of the dye adhered in a circle is higher than the intensity of the electromagnetic wave applied to the peripheral portion of the dye. In addition, the heat in the central portion of the circular dye is unlikely to be dissipated than the heat in the peripheral portion. Therefore, the electromagnetic wave applied to the central portion of the circular dye is blocked by the temperature control masks 412R and 412L, so that the temperature in the central portion of the dye is suppressed from being excessively raised as compared with the temperature in the peripheral portion. As a result, the dye is likely to be uniformly transferred to the lens L.

As illustrated in FIG. 5, the blocked chamber placement unit 430 places the dyeing tray 80 on which the lens L and the base body S are placed facing each other in a non-contact manner inside the blocked chamber C as a unit of dyeing. When the dyeing tray 80 is placed inside the blocked chamber C by the blocked chamber placement unit 430, the generation sources 421R and 421L, the base body S, and the lens L of the electromagnetic wave generating unit 420 are disposed in order from the above along the vertical axis of the electromagnetic wave passing units 410R and 410L having a tubular shape. The electromagnetic wave generating unit 420 applies the electromagnetic wave downward from above the base body S. As a result, the subliming dye adhered to the lower surface of the base body S sublimates, descends, and is transferred (deposited) to the surface of the lens L.

The atmospheric pressure control unit 450 (refer to FIG. 4) is provided with a pump and a solenoid valve. By driving the pump, the gas in the blocked chamber C is discharged to the outside through an air supply and exhaust pipe. As a result, the inside of the blocked chamber C is a substantially vacuum state. By closing the solenoid valve, the airtightness in the blocked chamber C is maintained. In addition, when a solenoid valve 33 is opened, gas is introduced from the outside into the blocked chamber C in the depressurized state, and the atmospheric pressure in the blocked chamber C rises.

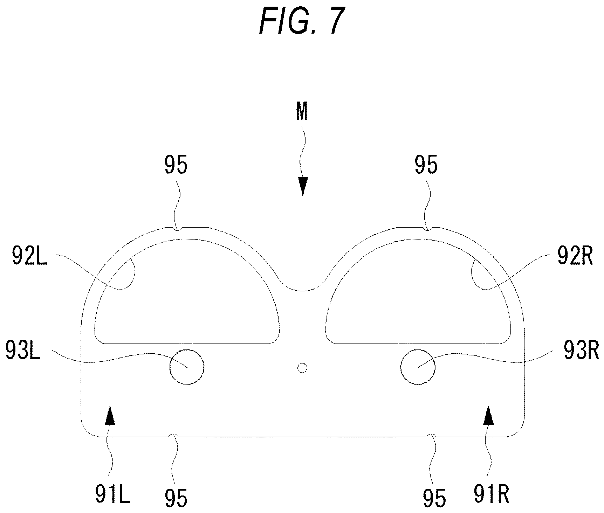

The mask M and the mask set unit 460 will be described in detail with reference to FIGs. 7 to 9. FIG. 7 is a plan view of the mask M. The upper part of FIG. 7 is the rear part of the mask M, and the lower part of FIG. 7 is the front part of the mask M.

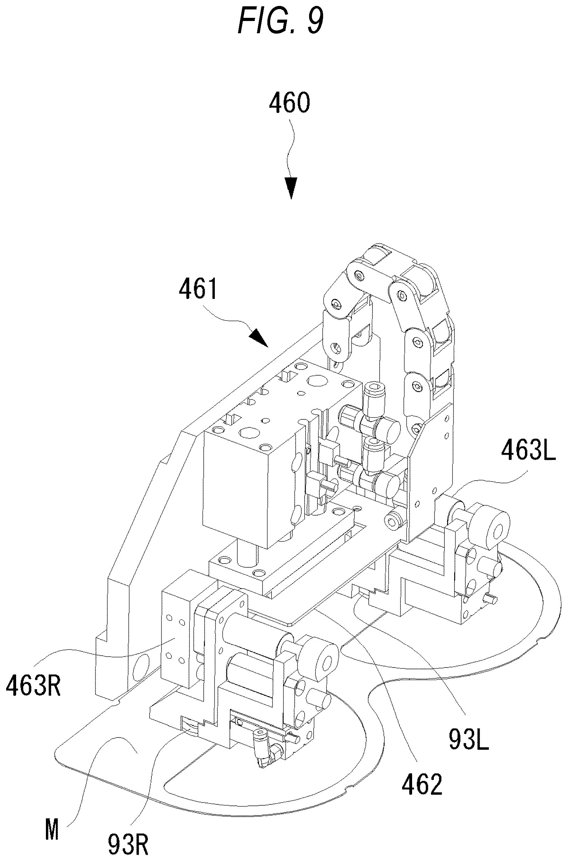

The mask M is formed in a sheet shape (plate shape in the present embodiment) of a material having heat resistance. The mask M is used in a transfer step (partial transfer step) in a case where the partial dyeing is performed. As described above, the partial dyeing of the present embodiment is a gradation dyeing. The gradation dyeing is a dyeing method in which the density of dyeing is continuously reduced from a dyed region (a region to be dyed) to a dyeing target region with respect to the lens surface of the lens L. In a case where the partial dyeing is performed, the dye is not adhered (printed) to a portion of the base body S (refer to FIG. 9) that is disposed to face the undyed region of the lens L. The dye is adhered (printed) to a portion of the base body S that is disposed to face the dyed region so that the density changes continuously.

The mask M of the present embodiment is provided with two mask units 91R and 91L. Substantially semicircular openings 92R and 92L are formed in each of the two mask units 91R and 91L. The portions other than the openings 92R and 92L of each of the mask units 91R and 91L shield at least one of the electromagnetic wave and the dye. As a result, the dye in the region of the base body S facing the openings 92R and 92L is transferred to the lens L, but the dye in the region facing the portions other than the openings 92R and 92L is not transferred.

Two held units 93R and 93L are provided on the upper surface of the mask M. The held units 93R and 93L project upward from the upper surface of the mask M. Although the details will be described later, the mask set unit 460 of the present embodiment holds the mask M by holding the two held units 93R and 93L.

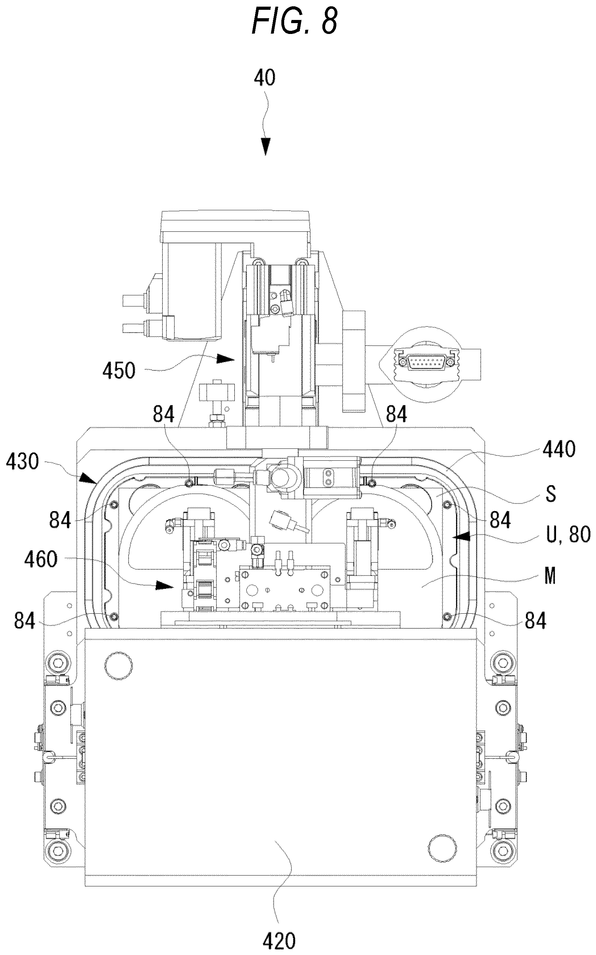

FIG. 8 is a plan view of the transfer device 40 in a state where the blocked chamber bottom portion 440 is moved to the mask attachment and detachment position. The upper part of FIG. 8 is the rear part of the transfer device 40, and the lower part of FIG. 8 is the front part of the transfer device 40. As illustrated in FIG. 8, in the mask set unit 460 of the present embodiment, the mask M is set in the transport unit U (dyeing tray 80) placed on the blocked chamber bottom portion 440 of the blocked chamber placement unit 430. Therefore, the mask M is appropriately set for each transport unit U that is a unit of dyeing. The mask set unit 460 is fixed to the rear surface of the base portion 404 (refer to FIG. 4) in the table portion 401.

Specifically, the mask set unit 460 of the present embodiment can set the mask M only by placing the mask M on the base body S placed on the dyeing tray 80 from above. Therefore, the mask M is easily set. Thereafter, the dyeing tray 80 on which the mask M is placed is placed inside the blocked chamber C (refer to FIG. 5) by the blocked chamber placement unit 430. As a result, the mask M is disposed between the electromagnetic wave generating unit 420 and the base body S in the space from the electromagnetic wave generating unit 420 to the lens L. Therefore, unlike the case where the mask M is disposed between the base body S and the lens L, the dye sublimated from the base body S is unlikely to adhere to the mask M. In addition, the distance between the base body S and the lens L does not change regardless of whether or not the mask M is set. Therefore, the transfer step is appropriately performed with the mask M set.

The mask M placed in the blocked chamber C (specifically, portion of the mask units 91R and 91L other than the openings 92R and 92L) shields a portion of the base body S that is projected on the undyed region of the lens L (that is, region of the base body S that faces the undyed region of the lens L) when viewed from the electromagnetic wave generating unit 420. Therefore, since the portion projected on the undyed region is not heated, the transfer of the dye to the undyed region of the lens L is appropriately suppressed.

In the mask M of the present embodiment, the two mask units 91R and 91L are connected (fixed) to each other. Therefore, as illustrated in FIG. 8, only by installing the mask M on the dyeing tray 80, not only the relative position of the mask M with respect to each lens L but also the angle (direction) of each of the mask units 91R and 91L with respect to each lens L is automatically determined. Therefore, the transfer step using the mask M is more appropriately performed.

As illustrated in FIG. 7, the mask M of the present embodiment is formed with a plurality of notches 95 corresponding to the positions and shapes of the projection units (positioning units) 84 (refer to FIG. 8) of the dyeing tray 80. As illustrated in FIG. 8, the mask set unit 460 sets the mask M in accordance with the projection unit 84 of the dyeing tray 80 (that is, so that the mask M is located inside the plurality of projection units 84) in a state where the dyeing tray 80 is moved to the attachment and detachment position. As a result, in the dyeing tray 80, the mask M is appropriately positioned in addition to the base body S. That is, in the dyeing tray 80, the relative positions of the mask M, the base body S, and the lens L are fixed to appropriate positions by the projection unit 84.

As illustrated in FIG. 9, the mask set unit 460 of the present embodiment is provided with a lifting and lowering unit 461, a base portion 462, and a pair of holding units 463R and 463L. The holding units 463R and 463L are fixed to the base portion 462. The lifting and lowering unit 461 vertically lifts and lowers the base portion 462 and the holding units 463R and 463L. The pair of holding units 463R and 463L are actuators (solenoids in the present embodiment) for switching between holding and releasing of the held units 93R and 93L of the mask M. The mask set unit 460 lowers the holding units 463R and 463L in a state where the dyeing tray 80 is moved to the attachment and detachment position, and can hold the mask M by interposing the held units 93R and 93L of the mask M by the holding units 463R and 463L. In addition, the mask set unit 460 can set the mask M on the dyeing tray 80 by releasing the holding of the mask M by the holding units 463R and 463L in a state where the dyeing tray 80 is moved to the attachment and detachment position.

### (Transfer Control Processing)

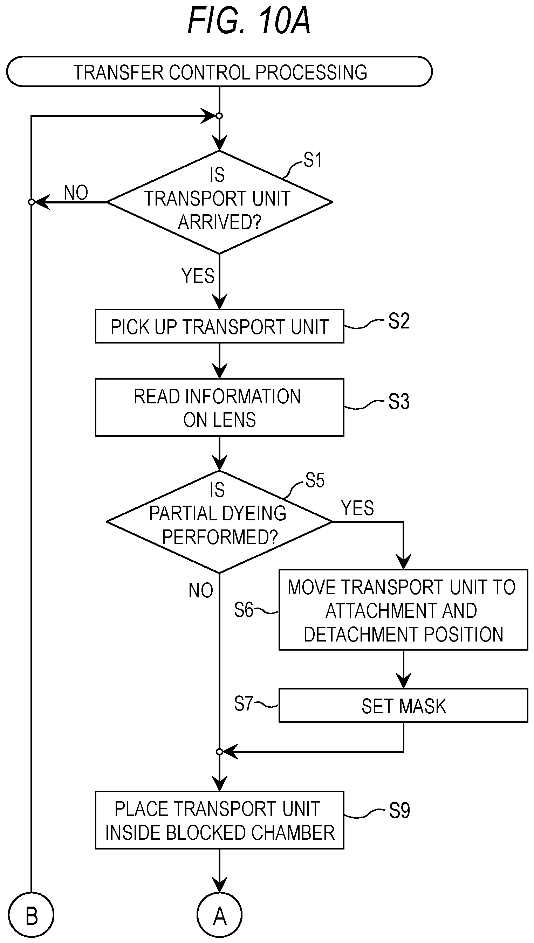

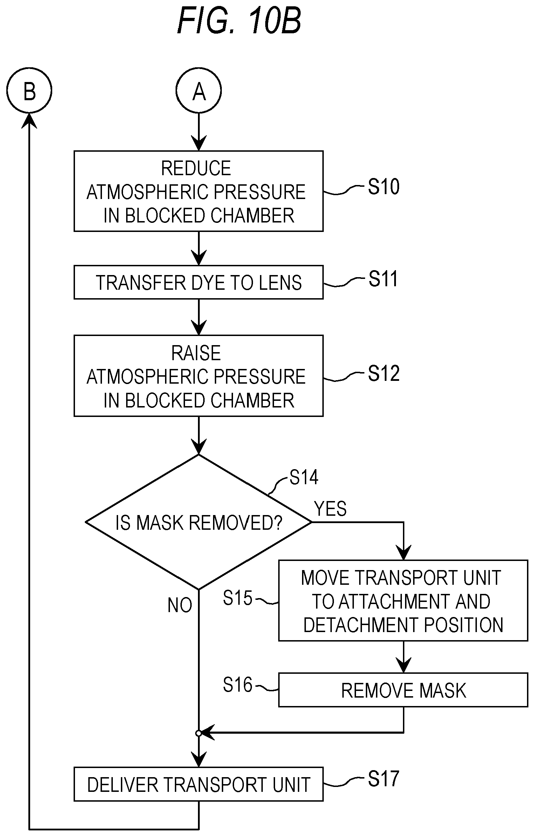

The transfer control processing performed by the transfer device 40 of the present embodiment will be described with reference to FIGs. 10A and 10B. In the transfer control processing, an appropriate transfer step is automatically performed according to whether or not the partial dyeing is performed on the lens L. The controller of the transfer device 40 (in the present embodiment, controller 71 of the control device 70) performs the transfer control processing illustrated in FIGs. 10A and 10B according to the transfer control program stored in the storage device.

First, the controller 71 determines whether or not the transport unit U on which the lens L and the base body S are placed is transported to the front of the transfer device 40 (that is, delivery unit 11 illustrated in FIG. 3) by the transport device 10 (step S1). When the transport unit U is not transported (step S1: NO), the processing is in a standby state. When the transport unit U is transported to the front of the transfer device 40 (step S1: YES), the controller 71 moves the blocked chamber bottom portion 440 to the front on the transport device 10 side by the blocked chamber placement unit 430, and picks up the transport unit U from the delivery unit 11 of the transport device 10 to the transport unit placing unit 441 of the blocked chamber bottom portion 440 (step S2).

Next, the controller 71 acquires the information regarding the lens L of the transport unit U read by the reading unit 2 (refer to FIG. 1) (step S3). As described above, in the present embodiment, the information on the lens L read by the reading unit 2 includes information indicating whether or not the partial dyeing is performed with respect to the lens L.

When the lens L of the transport unit U is not the lens L on which the partial dyeing is performed (step S5: NO), the processing proceeds to S9 as it is. When the lens L of the transport unit U is the lens L on which the partial dyeing is performed (step S5: YES), the controller 71 moves the blocked chamber bottom portion 440 to the attachment and detachment position of the mask M by the blocked chamber placement unit 430 (step S6). That is, the controller 71 moves the blocked chamber bottom portion 440 from the transport device 10 side (front side) to the rear part, passes through the blocked chamber C as it is, and stops at the attachment and detachment position behind the blocked chamber C.

Next, the controller 71 sets the mask M on the dyeing tray 80 of the transport unit U that is moved to the attachment and detachment position (step S7). Specifically, the controller 71 places the mask M on the base body S in the dyeing tray 80 by releasing the holding of the mask M by the mask set unit 460.

The controller 71 places the transport unit U placed on the blocked chamber bottom portion 440 by the blocked chamber placement unit 430 inside the blocked chamber C (step S9). Specifically, the controller 71 moves the blocked chamber bottom portion 440 below the blocked chamber C and then raises the blocked chamber bottom portion 440 to place the transport unit U inside the blocked chamber C in a sealed state. As described above, in a case where the mask M is set in the transport unit U, the transport unit U is placed in the blocked chamber C, so that the portion of the base body S facing the undyed region of the lens L is in a state of being shielded by the mask M when viewed from the electromagnetic wave generating unit 420 side. The generation sources 421R and 421L of the electromagnetic wave generating unit 420 may be provided outside the blocked chamber C.

The controller 71 reduces the atmospheric pressure in the blocked chamber C by the atmospheric pressure control unit 450 to bring the blocked chamber C into a substantially vacuum state (step S10). Next, the controller 71 generates an electromagnetic wave from the electromagnetic wave generating unit 420 and heats the dye of the base body S to sublimate the dye and transfer the dye to the lens L (step S11). As described above, in a case where the mask M is set in the transport unit U, the possibility that the dye is unintentionally transferred from the base body S to the undyed region of the lens L is reduced. Thereafter, the controller 71 raises the atmospheric pressure in the blocked chamber C by the atmospheric pressure control unit 450 and returns the atmospheric pressure to the air pressure (step S12).

The controller 71 determines whether or not the mask M to be removed is included in the transport unit U (step S14). When the mask M to be removed is not included (step S14: NO), the processing proceeds to S17 as it is. In a case where the mask M to be removed is included in the transport unit U (step S14: YES), the controller 71 moves the blocked chamber bottom portion 440 to the attachment and detachment position of the mask M by the blocked chamber placement unit 430 as similar to the processing of S6 (step S15). The controller 71 removes the mask M from the dyeing tray 80 of the transport unit U that is moved to the attachment and detachment position (step S16). Specifically, the controller 71 removes the mask M from the dyeing tray 80 by lowering the holding units 463R and 463L of the mask set unit 460 to hold the held units 93R and 93L of the mask M.

Next, the controller 71 moves the blocked chamber bottom portion 440 forward by the blocked chamber placement unit 430 on the transport device 10 side, and delivers the transport unit U to the delivery unit 11 of the transport device 10 (step S17). Thereafter, the processing returns to S1. By the above processing, an appropriate transfer step according to whether or not the partial dyeing is performed is automatically performed.

The flow of a plurality of steps performed by the dyeing system 1 will be described again. The steps performed by the dyeing system 1 of the present embodiment include the mask setting step (steps S6, S7), the transfer step (steps S9 to S11), the mask removing step (steps S15, S16), the transport step, and the dye fixing step. In the mask setting step, the dyeing system 1 (transfer device 40) sets the mask M by the mask set unit 460 in a case where the partial dyeing is performed. In the transfer step, the dyeing system 1 (transfer device 40) heats the dye on the base body S to fix the dye to the lens L, in a state where the undyed region and the electromagnetic wave generating unit 420 are shielded by the mask M and the atmospheric pressure in the blocked chamber C is lowered. In the mask removing step, the dyeing system 1 (transfer device 40) removes the mask M used in the transfer step. In the transport step, the dyeing system (transport device 10) transports the lens L (in the present embodiment, dyeing tray 80 on which the lens L is placed) from the transfer device 40 to the dye fixing device 50. In the dye fixing step, the dyeing system (dye fixing device 50) heats the lens L to which the dye is adhered and diffuses the dye into the lens L to fix the dye to the lens L.

The transfer device 40 of the present embodiment can also perform the replacement operation of the mask M used by the mask set unit 460. Specifically, the controller 71 performs the mask removing step and the mask mounting step in a case where the mask M replacement instruction is input. In the mask removing step, the controller 71 sets the mask M on the dyeing tray 80 by the mask set unit 460, and then delivers the dyeing tray 80 on which the mask M is set to the transport device 10 as it is. In the mask mounting step, the controller 71 holds the mask M by the mask set unit 460 from the dyeing tray 80 transported through the transport device 10 with the new mask M placed. As a result, the mask M is appropriately replaced.

The techniques disclosed in the above embodiments are merely examples. Therefore, it is possible to modify the techniques exemplified in the above embodiments. For example, in the above embodiment, the mask M is set between the base body S and the lens L. However, the mask set unit 460 may set the mask M between the base body S and the lens L in the space from the electromagnetic wave generating unit 420 to the lens L. In this case, the dye is blocked by the mask M while the sublimated dye is moving from the base body S to the undyed region of the lens L. Therefore, the transfer of the dye to the undyed region is appropriately suppressed.

In addition, all of the plurality of steps performed in the transfer control processing (refer to FIGs. 10A and 10B) of the above embodiment are automatically performed by the transfer device 40. However, the transfer method may be performed by performing at least a part of the plurality of steps by the operator. For example, the mask setting step (step S7) may be performed by the operator. In addition, the step (step S9) of placing the lens L inside the blocked chamber C may be performed by the operator. All steps may be performed by the operator.

## Claims

1. A transfer device (40) that transfers a subliming dye from a base body (S) to which the dye is adhered, to a resin body (L) to be dyed, wherein:
- the transfer device (40) comprises:
- a blocked chamber placement unit (430) that places the resin body (L) transported from an outside inside a blocked chamber (C) in a state where the resin body (L) faces the base body (S) in a non-contact manner;
- an electromagnetic wave generating unit (420) that generates an electromagnetic wave for heating the dye adhered to the base body (S);
- a mask set unit (460) that sets a mask (M) shielding a part of a space from the electromagnetic wave generating unit (420) to the resin body (L);
- an atmospheric pressure control unit (450) that controls an atmospheric pressure in the blocked chamber (C) in which the base body (S) and the resin body (L) are placed; and
- a controller (71) that controls the transfer device (40),
- in a case where partial dyeing that changes a dyeing state in a dyed region and a undyed region is performed, the controller (71) sets the mask (M) by the mask set unit (460) to shield between the undyed region and the electromagnetic wave generating unit (420), and performs a partial transfer step of heating the dye of the base body (S) by the electromagnetic wave generating unit (420), in a state where the atmospheric pressure in the blocked chamber (C) is lowered by the atmospheric pressure control unit (450), to transfer the dye to the resin body (L), and
- **characterized in that** the mask set unit (460) sets the mask (M) between the electromagnetic wave generating unit (420) and the base body (S) in the space from the electromagnetic wave generating unit (420) to the resin body (L).

2. The transfer device (40) according to claim 1, wherein the partial dyeing includes a gradation dyeing that continuously reduces a density of dyeing from the dyed region to the undyed region.

3. The transfer device (40) according to claim 1, wherein:
- the electromagnetic wave generating unit (420) applies the electromagnetic wave downward from above the base body (S), and
- the mask set unit (460) places the mask (M) on the base body (S) from above to set the mask (M).

4. The transfer device (40) according to claim 1 or 2, wherein the mask set unit (460) sets the mask (M) between the base body (S) and the resin body (L) in the space from the electromagnetic wave generating unit (420) to the resin body (L).

5. The transfer device (40) according to any one of the preceding claims,
- further comprising a reading unit (2) that reads information regarding the resin body (L) to be dyed,
- wherein the controller (71) controls whether or not the mask (M) is set by the mask set unit (460) according to information indicating whether or not the partial dyeing is performed with respect to the resin body (L), which is included in the information read by the reading unit (2).

6. The transfer device according to any one of the preceding claims, wherein:
- the blocked chamber placement unit (430) places a dyeing tray (80), as a unit of dyeing, on which the resin body (L) and the base body (S) are placed facing each other in a non-contact manner inside the blocked chamber (C), and
- the mask set unit (460) sets the mask (M) on the dyeing tray (80).

7. The transfer device (40) according to claim 6, wherein:
- the dyeing tray (80) includes:
- a base body placing unit (85) on which the base body (S) is placed; and
- a positioning unit (84) that projects upward from an outside of the base body placing unit (85) and positions the base body (S) to be placed on the base body placing unit (85), and
- the mask set unit (460) sets the mask (M) in accordance with the positioning unit (84) of the dyeing tray (80) to fix a position of the mask (M).

8. The transfer device (40) according to claim 6 or 7, wherein:
- the resin body (L) is a lens (L) used for eyeglasses,
- two lenses (L) are placeable on the dyeing tray (80), and
- the mask (M) includes two mask units (91L, 91R) used for each of the two lenses (L) placed on the dyeing tray (80).

9. A dyeing system (1) comprising:
- a transfer device (40) according to any one of the preceding claims; and
- a dye fixing device (50) that heats a resin body (L) to which a subliming dye is transferred by the transfer device (40) to fix the dye to the resin body (L).

10. The dyeing system (1) according to claim 9, wherein:
- the dye fixing device (50) includes:
- a laser light source (51) that emits laser light; and
- a scanning unit (52) that scans the laser light emitted from the laser light source (51), and
- the dye fixing device (50) irradiates the resin body (L) with the laser light to fix the dye to the resin body (L).

## Patentansprüche

1. Übertragungsvorrichtung (40), die einen sublimierenden Farbstoff von einem Grundkörper (S), an dem der Farbstoff haftet, auf einen zu färbenden Harzkörper (L) überträgt, wobei:
- die Übertragungsvorrichtung (40) umfasst:
- eine Einheit (430) zum Platzieren einer blockierten Kammer, die den von außen transportierten Harzkörper (L) in einer blockierten Kammer (C) in einem Zustand platziert, in dem der Harzkörper (L) dem Grundkörper (S) berührungslos zugewandt ist;
- eine Einheit (420) zum Erzeugen elektromagnetischer Wellen, die eine elektromagnetische Welle zum Erwärmen des an dem Grundkörper (S) haftenden Farbstoffs erzeugt;
- eine Maskeneinstelleinheit (460), die eine Maske (M) einstellt, die einen Teil eines Raums von der Einheit (420) zum Erzeugen elektromagnetischer Wellen zu dem Harzkörper (L) abschirmt;
- eine Atmosphärendrucksteuereinheit (450), die einen Atmosphärendruck in der blockierten Kammer (C) steuert, in der der Grundkörper (S) und der Harzkörper (L) platziert sind; und
- eine Steuerung (71), die die Übertragungsvorrichtung (40) steuert,
- in einem Fall, in dem ein Teilfärben, das einen Färbezustand in einem gefärbten Bereich und einem ungefärbten Bereich ändert, durchgeführt wird, die Steuerung (71) die Maske (M) durch die Maskeneinstelleinheit (460) einstellt, um zwischen dem ungefärbten Bereich und der Einheit (420) zum Erzeugen elektromagnetischer Wellen abzuschirmen, und einen Teilübertragungsschritt des Erwärmens des Farbstoffs des Grundkörpers (S) durch die Einheit (420) zum Erzeugen elektromagnetischer Wellen in einem Zustand durchführt, in dem der Atmosphärendruck in der blockierten Kammer (C) durch die Atmosphärendrucksteuereinheit (450) gesenkt wird, um den Farbstoff auf den Harzkörper (L) zu übertragen, und
- **dadurch gekennzeichnet, dass** die Maskeneinstelleinheit (460) die Maske (M) zwischen der Einheit (420) zum Erzeugen elektromagnetischer Wellen und dem Grundkörper (S) in dem Raum von der Einheit (420) zum Erzeugen elektromagnetischer Wellen zu dem Harzkörper (L) einstellt.

2. Übertragungsvorrichtung (40) nach Anspruch 1, wobei das Teilfärben ein Abstufungsfärben umfasst, das eine Färbedichte von dem gefärbten Bereich zu dem ungefärbten Bereich kontinuierlich verringert.

3. Übertragungsvorrichtung (40) nach Anspruch 1, wobei:
- die Einheit (420) zum Erzeugen elektromagnetischer Wellen die elektromagnetische Welle von oberhalb des Grundkörpers (S) nach unten anlegt, und
- die Maskeneinstelleinheit (460) die Maske (M) von oben auf dem Grundkörper (S) platziert, um die Maske (M) einzustellen.

4. Übertragungsvorrichtung (40) nach Anspruch 1 oder 2, wobei die Maskeneinstelleinheit (460) die Maske (M) zwischen dem Grundkörper (S) und dem Harzkörper (L) in dem Raum von der Einheit (420) zum Erzeugen elektromagnetischer Wellen zu dem Harzkörper (L) einstellt.

5. Übertragungsvorrichtung (40) nach einem der vorhergehenden Ansprüche,
- ferner umfassend eine Leseeinheit (2), die Informationen bezüglich des zu färbenden Harzkörpers (L) liest,
- wobei die Steuerung (71) steuert, ob die Maske (M) durch die Maskeneinstelleinheit (460) eingestellt ist oder nicht, gemäß Informationen, die angeben, ob das Teilfärben in Bezug auf den Harzkörper (L) durchgeführt wird oder nicht, die in den durch die Leseeinheit (2) gelesenen Informationen enthalten sind.

6. Übertragungsvorrichtung nach einem der vorhergehenden Ansprüche, wobei:
- die Einheit (430) zum Platzieren einer blockierten Kammer eine Färbeschale (80) als eine Färbeeinheit platziert, auf der der Harzkörper (L) und der Grundkörper (S) einander berührungslos zugewandt in der blockierten Kammer (C) platziert sind, und
- die Maskeneinstelleinheit (460) die Maske (M) auf der Färbeschale (80) einstellt.

7. Übertragungsvorrichtung (40) nach Anspruch 6, wobei:
- die Färbeschale (80) umfasst:
- eine Grundkörperplatzierungseinheit (85), auf der der Grundkörper (S) platziert ist; und
- eine Positionierungseinheit (84), die von einer Außenseite der Grundkörperplatzierungseinheit (85) nach oben vorsteht und den auf der Grundkörperplatzierungseinheit (85) zu platzierenden Grundkörper (S) positioniert, und
- die Maskeneinstelleinheit (460) die Maske (M) gemäß der Positionierungseinheit (84) der Färbeschale (80) einstellt, um eine Position der Maske (M) zu fixieren.

8. Übertragungsvorrichtung (40) nach Anspruch 6 oder 7, wobei:
- der Harzkörper (L) eine Linse (L) ist, die für Brillen verwendet wird,
- zwei Linsen (L) auf der Färbeschale (80) platzierbar sind, und
- die Maske (M) zwei Maskeneinheiten (91L, 91R) umfasst, die für jede der zwei Linsen (L) verwendet werden, die auf der Färbeschale (80) platziert sind.

9. Färbesystem (1), umfassend:
- eine Übertragungsvorrichtung (40) nach einem der vorhergehenden Ansprüche; und
- eine Farbstofffixiervorrichtung (50), die einen Harzkörper (L) erwärmt, auf den ein sublimierender Farbstoff durch die Übertragungsvorrichtung (40) übertragen wird, um den Farbstoff an dem Harzkörper (L) zu fixieren.

10. Färbesystem (1) nach Anspruch 9, wobei:
- die Farbstofffixiervorrichtung (50) umfasst:
- eine Laserlichtquelle (51), die Laserlicht emittiert; und
- eine Abtasteinheit (52), die das von der Laserlichtquelle (51) emittierte Laserlicht abtastet, und
- die Farbstofffixiervorrichtung (50) den Harzkörper (L) mit dem Laserlicht bestrahlt, um den Farbstoff an dem Harzkörper (L) zu fixieren.

## Revendications

1. Dispositif de transfert (40) qui transfère un colorant de sublimation d'un corps de base (S) auquel le colorant est adhéré, à un corps en résine (L) à colorer, dans lequel:
- le dispositif de transfert (40) comprend :
- une unité de placement de chambre bloquée (430) qui place le corps en résine (L) transporté depuis un extérieur à l'intérieur d'une chambre bloquée (C) dans un état où le corps en résine (L) fait face au corps de base (S) d'une manière sans contact ;
- une unité de génération d'onde électromagnétique (420) qui génère une onde électromagnétique pour chauffer le colorant adhéré au corps de base (S) ;
- une unité de réglage de masque (460) qui règle un masque (M) protégeant une partie d'un espace de l'unité de génération d'onde électromagnétique (420) au corps en résine (L) ;
- une unité de commande de pression atmosphérique (450) qui commande une pression atmosphérique dans la chambre bloquée (C) dans laquelle le corps de base (S) et le corps en résine (L) sont placés ; et
- un dispositif de commande (71) qui commande le dispositif de transfert (40),
- dans un cas où une coloration partielle qui change un état de coloration dans une région colorée et une région non colorée est effectuée, le dispositif de commande (71) règle le masque (M) par l'unité de réglage de masque (460) pour protéger entre la région non colorée et l'unité de génération d'onde électromagnétique (420), et effectue une étape de transfert partielle consistant à chauffer le colorant du corps de base (S) par l'unité de génération d'onde électromagnétique (420), dans un état où la pression atmosphérique dans la chambre bloquée (C) est abaissée par l'unité de commande de pression atmosphérique (450), pour transférer le colorant au corps en résine (L), et
- **caractérisé en ce que** l'unité de réglage de masque (460) règle le masque (M) entre l'unité de génération d'onde électromagnétique (420) et le corps de base (S) dans l'espace de l'unité de génération d'onde électromagnétique (420) au corps en résine (L).

2. Dispositif de transfert (40) selon la revendication 1, dans lequel la coloration partielle comprend une coloration par gradation qui réduit en continu une densité de coloration de la région colorée à la région non colorée.

3. Dispositif de transfert (40) selon la revendication 1, dans lequel:
- l'unité de génération d'onde électromagnétique (420) applique l'onde électromagnétique vers le bas depuis le dessus du corps de base (S), et
- l'unité de réglage de masque (460) place le masque (M) sur le corps de base (S) depuis le dessus pour régler le masque (M).

4. Dispositif de transfert (40) selon la revendication 1 ou 2, dans lequel l'unité de réglage de masque (460) règle le masque (M) entre le corps de base (S) et le corps en résine (L) dans l'espace de l'unité de génération d'onde électromagnétique (420) au corps en résine (L).

5. Dispositif de transfert (40) selon l'une quelconque des revendications précédentes,
- comprenant en outre une unité de lecture (2) qui lit des informations concernant le corps en résine (L) à colorer,
- dans lequel le dispositif de commande (71) commande si oui ou non le masque (M) est réglé par l'unité de réglage de masque (460) selon des informations indiquant si oui ou non la coloration partielle est effectuée par rapport au corps en résine (L), qui sont incluses dans les informations lues par l'unité de lecture (2).

6. Dispositif de transfert selon l'une quelconque des revendications précédentes, dans lequel :
- l'unité de placement de chambre bloquée (430) place un plateau de coloration (80), en tant qu'unité de coloration, sur lequel le corps en résine (L) et le corps de base (S) sont placés en face l'un de l'autre d'une manière sans contact à l'intérieur de la chambre bloquée (C), et
- l'unité de réglage de masque (460) règle le masque (M) sur le plateau de coloration (80).

7. Dispositif de transfert (40) selon la revendication 6, dans lequel:
- le plateau de coloration (80) comprend :
- une unité de placement de corps de base (85) sur laquelle le corps de base (S) est placé ; et
- une unité de positionnement (84) qui fait saillie vers le haut depuis un extérieur de l'unité de placement de corps de base (85) et positionne le corps de base (S) à placer sur l'unité de placement de corps de base (85), et
- l'unité de réglage de masque (460) règle le masque (M) conformément à l'unité de positionnement (84) du plateau de coloration (80) pour fixer une position du masque (M).

8. Dispositif de transfert (40) selon la revendication 6 ou 7, dans lequel:
- le corps en résine (L) est un verre (L) utilisé pour des lunettes,
- deux verres (L) peuvent être placés sur le plateau de coloration (80), et
- le masque (M) comprend deux unités de masque (91L, 91R) utilisées pour chacun des deux verres (L) placés sur le plateau de coloration (80).

9. Système de coloration (1) comprenant :
- un dispositif de transfert (40) selon l'une quelconque des revendications précédentes ; et
- un dispositif de fixation de colorant (50) qui chauffe un corps en résine (L) auquel un colorant de sublimation est transféré par le dispositif de transfert (40) pour fixer le colorant au corps en résine (L).

10. Système de teinture (1) selon la revendication 9, dans lequel :
- le dispositif de fixation de colorant (50) comprend :
- une source de lumière laser (51) qui émet une lumière laser ; et
- une unité de balayage (52) qui balaie la lumière laser émise par la source de lumière laser (51), et
- le dispositif de fixation de colorant (50) irradie le corps en résine (L) avec la lumière laser pour fixer le colorant au corps en résine (L).
